# EUROPÄISCHE PATENTANMELDUNG

(11) **EP 1 174 639 A2**
(43) Veröffentlichungstag der Anmeldung: **23.01.2002**
(21) Anmeldenummer: 01113809.6
(22) Anmeldetag: 06.06.2001
(51) Int. Cl.: F16H 1/22

(54) **Getriebe, insbesondere für einen Roboter**

(30) Priorität: 18.07.2000 DE 20012444 U
(71) Anmelder: KUKA Roboter GmbH, 86165 Augsburg (DE)
(72) Erfinder: Markert, Joachim, 86163 Augsburg (DE)
(74) Vertreter: Lempert, Jost, Dipl.-Phys. Dr. rer.nat.

(57) **Zusammenfassung**

Bei einem Getriebe (1), insbesondere für einen Roboter, mit einer Antriebswelle (7) und wenigstens zwei relativ zu dieser und relativ zueinander drehbaren Teilen (3,4), wobei eine Bewegung des einen Teils (3,4) auf seiner dem anderen Teil (4,3) abgewandten Seite (3b,4b) abnehmbar ist, weist wenigstens eines der drehbaren Teile (3,4) eine drehfest mit ihm verbundene Welle (15) auf, die zumindest zu dem anderen Teil (4,3) hinragt.

## Beschreibung

Die Erfindung betrifft ein Getriebe, insbesondere für einen Roboter, mit einer Antriebswelle und wenigstens zwei relativ zu dieser und relativ zueinander drehbaren Teilen, wobei eine Bewegung des einen Teils auf seiner dem anderen Teil abgewandten Seite abnehmbar ist, sowie einen mit wenigstens einem solchen Getriebe ausgestatteten Roboter.

Mehrachsige Roboter sind z.B. in Form von Industrierobotern bekannt und dienen der automatischen Verrichtung von Transport- und Arbeitsvorgängen. Sie weisen in der Regel ein auf einem Gestell angeordnetes, um eine Grundachse drehbares Karussell und einen auf das Karussell aufgesetzten Aufbau mit einem um mehrere Achsen schwenkbaren Roboterarm auf. Zum gegenseitigen Verschwenken der Drehachse des Roboters, z.B. zum Drehen des Karussells bezüglich des stationären Gestells, sind Getriebe mit einer Antriebswelle und wenigstens zwei relativ zu dieser und relativ zueinander drehbaren Teilen, wie zwei Halbschalen oder einer Getriebewelle und einem Getriebegehäuse vorgesehen, an denen jeweils eines der um die jeweilige Roboterachse verschwenkbaren Roboterteile festgelegt ist. Die Bewegung des einen Teils, z.B. des Getriebegehäuses, muß daher auf seiner dem anderen Teil, z.B. der Getriebewelle, abgewandten Seite abnehmbar ein. Die Antriebswelle steht in der Regel mit einem Antriebsmotor in Wirkverbindung.

Um einen einwandfreien und exakten Betrieb des Roboters sicherzustellen, sind Sensoreinrichtungen erforderlich, die die Winkelstellungen der Roboterachsen erfassen, überwachen und gegebenenfalls begrenzen, so dass z.B. ein mit einem Sollverlauf vergleichbarer Istverlauf der Winkelstellung der Roboterachsen erhalten wird und die Istwerte gegebenenfalls an die Sollwerte angepasst werden können.

Ferner ist es häufig erwünscht, wenigstens eines der Roboterteile mit einem zusätzlichen Drehmoment zu beaufschlagen, was mittels eines herkömmlichen Getriebes kaum möglich ist.

Der Erfindung liegt die Aufgabe zugrunde, ein Getriebe der eingangs genannten Art auf einfache und kostengünstige Weise dahingehend weiterzubilden, dass eine in das Getriebe integrierte Anordnung von Zusatzeinrichtungen, z. B. einer Sensoreinrichtung oder einer Einrichtung zum Beaufschlagen eines der relativ zueinander drehbaren Teile des Getriebes mit einem Drehmoment, z.B. einem Hilfsmotor, möglich ist.

Erfindungsgemäß wird diese Aufgabe bei einem Getriebe der eingangs genannten Art dadurch gelöst, dass wenigstens eines der drehbaren Teile eine drehfest mit ihm verbundene Welle aufweist, die zumindest zu dem anderen Teil hinragt.

Durch die erfindungsgemäße Ausgestaltung wird eine drehfest mit dem einen drehbaren Teil des Getriebes verbundene, zusätzliche Welle bereitgestellt, die eine in das Getriebe integrierte, z.B. innerhalb desselben oder unmittelbar an demselben angeordnete Anordnung von Zusatzeinrichtungen, wie Sensoreinrichtungen, Bewegungsbegrenzungseinrichtungen, Hilfsmotoren oder dergleichen, an der dem anderen Teil zugewandten Seite des einen Teils des Getriebes gewährleistet. Die Bewegung des mit der zusätzlichen Welle ausgestatteten einen drehbaren Teil des Getriebes ist folglich sowohl an seiner dem anderen, relativ zu diesem drehbaren Teil des Getriebes abgewandten Seite, wie es bei herkömmlichen Getrieben bekannt ist, als auch an seiner dem anderen Teil zugekehrten Seite an der zu diesem Teil hinragenden Welle abnehmbar, was insbesondere eine Erfassung der Relativbewegung der beiden relativ zueinander drehbaren Getriebeteile ermöglicht.

Während die Bewegung des mit der zusätzlichen, zu dem anderen Teil des Getriebes hinragenden Welle versehenen einen Teils des Getriebes grundsätzlich an der diesem Teil zugewandten Seite des anderen Teils abnehmbar sein kann, ist in bevorzugter Ausführung vorgesehen, dass die an dem einen Teil angeordnete Welle das andere Teil zu seiner dem einen Teil abgewandten Seite hin durchsetzt. Derart ist die Bewegung des einen Teils mittels der das andere Teil durchsetzenden Welle an der dem Teil mit der Welle abgewandten Seite des anderen Teils abnehmbar, was bei einem Roboter insbesondere aus Platzgründen von Vorteil ist, um eine hohe Kompaktheit des Getriebes bzw. der gesamten Anordnung des jeweiligen Robotergelenks zu erzielen.

Eine bevorzugte Ausführung sieht vor, dass die an dem einen Teil angeordneten Welle Antrieb einer in und/oder an dem anderen Teil angeordneten Sensoreinrichtung ist, wobei die Sensoreinrichtung beispielsweise als Überwachungseinrichtung zur Erfassung und/oder Begrenzung der Drehparameter ausgebildet sein kann. Durch die erfindungsgemäße Ausgestaltung des Getriebes wird im Falle einer solchen in das Getriebe integrierten Sensoreinrichtung eine mechanische Beschädigung oder Verschmutzung der Sensoreinrichtung weitestgehend vermieden und folglich eine kontinuierliche Erfassung und Überwachung der Winkelstellung der Drehachse sowie gegebenenfalls eine Begrenzung ihres Drehwinkels sichergestellt. Die Integration der Sensoreinrichtung in das Getriebe resultiert ferner in einem kompakteren Aufbau des Roboters, wobei eine unerwünschte Einschränkung der Beweglichkeit der Drehachsen des Roboters durch die Sensoreinrichtung ausgeschlossen wird.

In bevorzugter Ausführung ist vorgesehen, dass die Sensoreinrichtung einen in einer Aufnahme geführten Wellenstummel aufweist und den Drehwinkel zwischen Wellenstummel und Aufnahme erfasst. Solche Sensoreinrichtungen sind an sich bekannt. Sie werden in der Regel im wesentlichen koaxial zur Drehachse des Roboters angeordnet und weisen beispielsweise an der in der Aufnahme befindlichen Stirnseite des Wellenstummels angeordnete optische, magnetische oder elektromagnetische Geber auf, die die Winkelstellung der jeweiligen Drehachse erfassen und/oder überwachen. Beim Drehen des Gebers bzw. des Wellenstummels bezüglich der Aufnahme der Sensoreinrichtung wird der Drehwinkel von einer in der Aufnahme angeordneten Einrichtung, wie beispielsweise einer Diode in Verbindung mit einem Fotoempfänger, erfasst.

Während die Aufnahme der Sensoreinrichtung mit Vorteil an dem einen Teil des Getriebes angeordnet ist, ist der Wellenstummel der Sensoreinrichtung vorzugsweise mit der an dem anderen Teil des Getriebes angeordneten, zu dem einen Teil hinragenden oder dieses durchsetzenden Welle drehfest verbunden. Ist z.B. der eine Teil des Getriebes nach Art eines Getriebegehäuses und der andere Teil nach Art einer Getriebewelle ausgebildet, so kann die Aufnahme der Sensoreinrichtung beispielsweise im Bereich der dem Getriebegehäuse zugewandten Stirnseite der Getriebewelle und hierbei im wesentlichen koaxial zur Drehachse des Roboter angeordnet sein, während der Wellenstummel auf der zum Getriebegehäuse hinragenden Welle der Getriebewelle sitzt. Die Aufnahme kann entweder an der der Getriebewelle zugewandten Innen- oder auch an der der Getriebewelle abgewandten Außenseite des Getriebegehäuses angeordnet sein, wobei der mit der Welle der Getriebewelle drehfest verbundene Wellenstummel im letztgenannten Fall das Getriebegehäuse durchsetzt.

Alternativ kann z.B. auch die Aufnahme der Sensoreinrichtung mit der Getriebewelle drehfest verbunden, während der Wellenstummel an der zu der Getriebewelle hinragenden, diese z.B. durchsetzenden Welle des Getriebegehäuses angeordnet ist. Die Überwachungseinrichtung kann somit z.B. im Bereich der dem Getriebegehäuse zugewandten oder auch der dieser abgewandten Stirnseite der Getriebewelle angeordnet sein.

Wie bereits angedeutet, ist in bevorzugter Ausführung eine optische, elektrische, elektromagnetische oder magnetische Überwachungseinrichtung, insbesondere ein Resolver, vorgesehen, die beispielsweise mit einem Momentenausgleich für die jeweilige Drehachse oder auch mit einer Steuereinrichtung zur Anpassung der Bewegungsdaten des Roboters in Verbindung stehen kann.

Eine weitere bevorzugte Ausführung sieht vor, dass die an dem einen Teil angeordnete Welle mit einem Drehmoment beaufschlagbar ist, was beispielsweise mittels eines Hilfsmotors geschehen kann.

Die Antriebswelle ist vorzugsweise eine hochdrehzahlseitige Abtriebswelle eines Antriebsmotors oder mit einer solchen verbindbar, so dass die drehbaren Teile des Getriebes mit bezüglich der Drehzahl der Antriebswelle niedrigerer Drehzahl bewegbar sind.

Die an dem einen drehbaren Teil des Getriebes angeordnete, zu dem anderen Teil hinragende Welle ist zweckmäßig koaxial zur Drehachse wenigstens eines der drehbaren Teile des Getriebes angeordnet, wobei vorzugsweise beide relativ zueinander drehbaren Teile des Getriebes koaxial angeordnet sind.

Das Getriebe ist bevorzugt ein insbesondere hochuntersetzendes Stirnrad-, Kegelrad-, Schneckenrad- oder Umlaufgetriebe, z.B. ein Umlaufrädergetriebe. In bevorzugter Ausführung ist vorgesehen, dass das Getriebe ein Harmonic-Drive-Getriebe ist. Harmonic-Drive-Getriebe umfassen einen Außenring mit Innenverzahnung, in die eine Außenverzahnung eines flexiblen Rohres eingreift. Der Durchmesser des Rohres ist etwas geringer als die Weite des Außenrings, so dass ein Zahneingriff erst erfolgt, sobald das Rohr durch einen in seinem Inneren drehenden ovalen oder elliptischen Drehkörper elliptisch verformt wird. Da sich die Anzahl der Zähne von Rohr (Flexspline) und Außenring geringfügig unterscheidet, dreht sich das insbesondere abtriebsseitige Rohr langsam, wenn der insbesondere antriebsseitige Drehkörper rotiert. Derartige Getriebe sind sehr spielarm und erreichen hohe Untersetzungen. Sie wurden in der Vergangenheit aufgrund ihrer hohen Präzision verbreitet in Robotern eingesetzt. Gegenwärtig sind sie aufgrund ihrer Nachteile (begrenzte Robustheit, Überspringen von Zähnen öbei hoher Belastung, geringer Rückwärtswirkungsgrad) weitgehend von anderen Getrieben verdrängt worden, so dass sich ihr Einsatz heute im wesentlichen auf kleine Roboter und Handachsen beschränkt.

Der Antriebsmotor kann zentral, exzentrisch oder auch unter einem endlichen Winkel, insbesondere etwa unter rechtem Winkel, bezüglich der Drehachse wenigstens eines der Teile des Getriebes sein.

Im übrigen betrifft die Erfindung auch einen mit wenigstens einem Getriebe der vorgenannten Art ausgestatteten Roboter.

Nachstehend ist die Erfindung anhand von Ausführungsbeispielen unter Bezugnahme auf die Zeichnungen näher erläutert. Es zeigen:
- Fig.1: eine schematische Seitenansicht eines Getriebes;
- Fig.2: eine schematische Seitenansicht einer Ausführungsvariante des Getriebes gemäß Fig. 1;
- Fig.3: eine schematische Schnittansicht einer anderen Ausführungsform eines Getriebes;
- Fig.4: eine schematische Schnittansicht einer Ausführungsvariante des Getriebes gemäß Fig. 3;
- Fig.5: eine schematische Schnittansicht eines Getriebes mit relativ zueinander drehbaren Teilen in Form eines Getriebegehäuses und einer Getriebewelle;
- Fig.6: eine Schnittansicht einer Ausführungsvariante des Getriebes gemäß Fig. 5;
- Fig.7: eine schematische Schnittansicht eines Getriebes mit relativ zueinander drehbaren Teilen in Form eines Getriebegehäuses und einer Getriebewelle mit Sensoreinrichtung;
- Fig.8: eine schematische Schnittansicht einer Ausführungsvariante des Getriebes gemäß Fig. 7 und
- Fig.9: eine schematische Schnittansicht einer anderen Ausführungsform eines Getriebes mit integrierter Sensoreinrichtung.

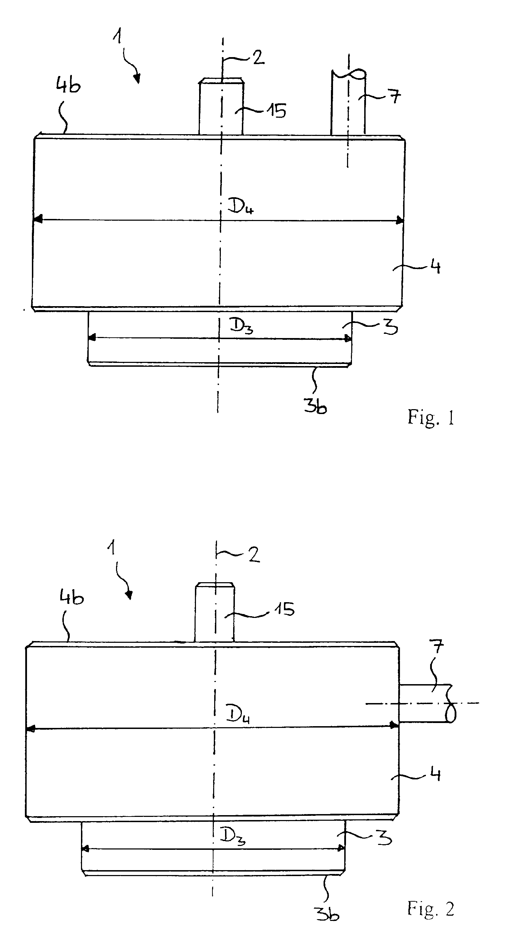

In Fig. 1 ist ein Getriebe 1, insbesondere für einen Roboter (nicht gezeigt), mit einer Antriebswelle 7 und zwei relativ zu dieser und relativ zueinander um eine gemeinsame Drehachse 2 drehbaren Teilen 3, 4 - hier mit Getriebewelle 3 und Getriebegehäuse 4 - mit verschiedenen Durchmessern D₃, D₄ dargestellt. Die Bewegung des Teils 3 ist in bekannter Weise auf seiner dem Teil 4 abgewandten Seite 3b und entsprechend die Bewegung des Teils 4 - relativ zum Teil 3 und auch zur Antriebswelle 7 - auf seiner dem Teil 3 abgewandten Seite 4b abnehmbar. Das Teil 3 weist eine zu dem Teil 4 hinragende - und in der gezeigten Ausführung das Teil 4 durchsetzende - Welle 15 auf, so dass die Bewegung des Teils 3 mittels der mit diesem verbundenen Welle 15 zusätzlich auch auf der dem Teil 3 zugewandten Seite 4b des Teils 4 abnehmbar ist. Die Welle 15 kann z.B. als Antrieb einer in bzw. an dem Teil 4 angeordneten Sensoreinrichtung, wie einer Überwachungseinrichtung (nicht gezeigt) zur Erfassung und/oder Begrenzung des Drehwinkels zwischen den Teilen 3, 4 oder zur Anordnung eines Hilfsmotors (nicht gezeigt) oder dergleichen dienen.

Während bei dem in Fig. 1 dargestellten Getriebe 1 eine bezüglich der Drehachse 2 der Teile 3, 4 parallele, exzentrisch angeordnete Antriebswelle 7 vorgesehen ist, ist die Antriebswelle 7 des Getriebes 1 gemäß Fig. 2 unter einem Winkel von etwa 90° bezüglich der Drehachse 2 angeordnet. Die Antriebswelle 7 ist insbesondere eine hochdrehzahlseitige Antriebswelle eines Antriebsmotors (nicht gezeigt) oder mit einer solchen verbindbar, so dass die Teile 3, 4 mit bezüglich der Drehzahl der Antriebswelle 7 niedrigerer Drehzahl bewegbar sind. Die von der Seite des Teils 4 am Getriebe angreifende Antriebswelle 7 kann selbstverständlich auch koaxial zu der Drehachse 2 des Getriebes 1 und/oder vom Teil 3 angreifen.

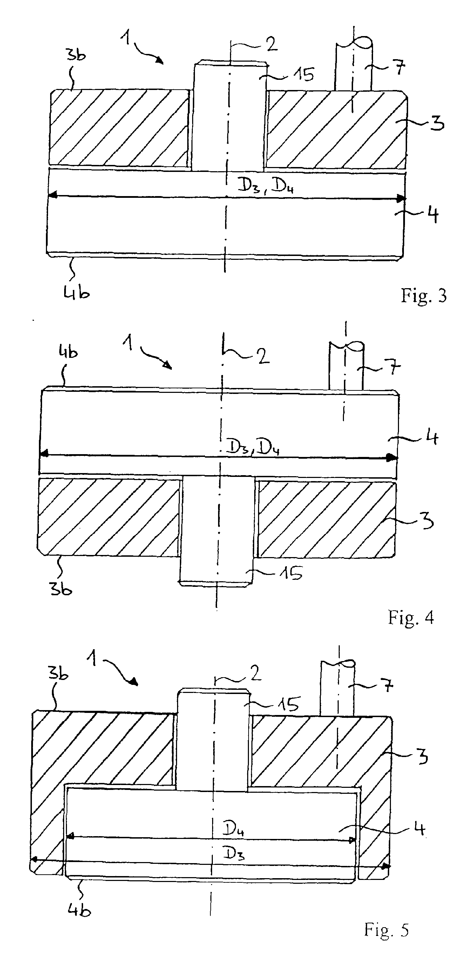

Der Fig. 3 ist ein Getriebe 1 mit zwei relativ zueinander drehbaren Teilen 3, 4 etwa gleichen Durchmessers D₃, D₄ entnehmbar, wobei eine an dem Teil 3 angeordnete Welle 15 das Teil 4 zu dessen dem Teil 3 abgewandten Seite 4b hin durchsetzt. Während bei dem Getriebe 1 gemäß Fig. 3 eine bezüglich seiner Drehachse 2 exzentrisch angeordnete, von dem von der Welle 15 durchsetzten Teil 4 her angreifenden Antriebswelle 7 vorgesehen ist, ist die Antriebswelle bei dem in Fig. 4 dargestellten Getriebe 1 von dem die Welle 15 aufweisenden Teil 4 her angreifend und ebenfalls exzentrisch zu seiner Drehachse 2 angeordnet. Bei Ausgestaltungen eines Getriebes wie denen der Figur 3 und 4 sind Getriebewelle und -gehäuse nicht unterscheidbar und die Zuordnung der Bezeichnung erfolgt nur durch Definition über den Umstand, dass in der Regel das Motorgehäuse des Antriebsmotors drehfest mit dem Getriebegehäuse verbunden ist, das daher als solches bezeichnet werden kann.

Das Getriebe 1 gemäß Fig. 5 unterscheidet sich von dem in Fig. 3 dargestellten Getriebe dadurch, dass das Teil 4 nach Art einer Halbschale oder eines Getriebegehäuses und das Teil 3 nach Art einer von dem Getriebegehäuse 3 aufgenommen Getriebewelle 3 mit bezüglich des Durchmessers D₃ des Getriebegehäuses 3 geringerem Durchmesser D₄ ausgebildet ist. Die Antriebswelle 7 ist beispielsweise mit dem Getriebegehäuse 4 wirkverbunden und exzentrisch zur Drehachse 2 des Getriebes 1 angeordnet.

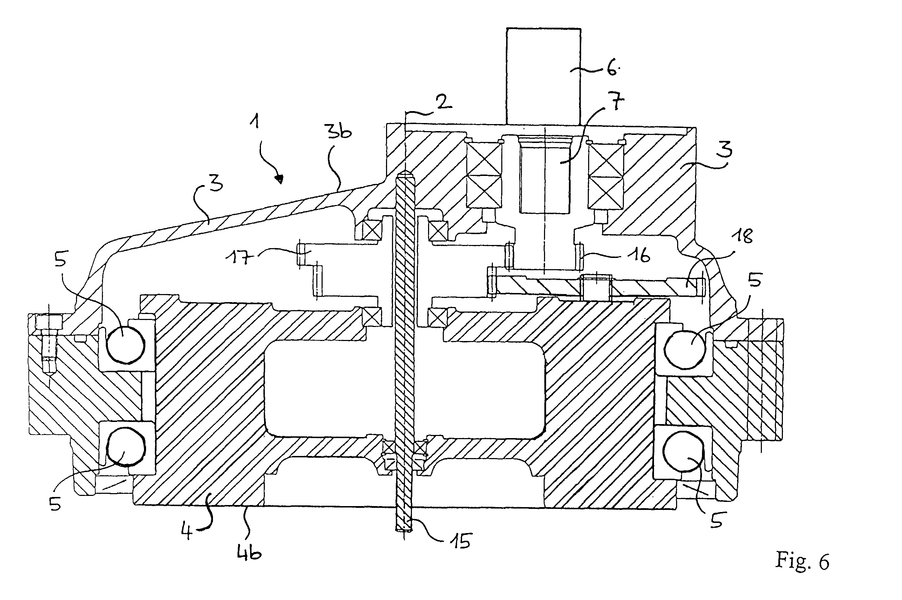

Die Fig. 6 zeigt einen Schnitt durch ein Getriebe 1 mit einem nach Art einer Getriebewelle ausgebildeten Teil 3, welches relativ zu einem nach Art eines Getriebegehäuses ausgebildeten Teils 4 drehbar ist. Die Bewegung eines der Teile (3, 4) ist jeweils auf dessen dem anderen Teil (4, 3) abgewandten Seite (3b, 4b) abnehmbar. Als Antriebswelle 7 dient eine Abtriebswelle eines an der der Getriebewelle 3 abgewandten Seite 4b des Getriebegehäuses 4 exzentrisch zur Drehachse 2 des Getriebes 1 angeordneten Antriebsmotors 6. Das Gehäuse des Motors ist drehfest mit dem Teil 4 des Getriebes dem Getriebegehäuse, verbunden.

Die Getriebewelle 3 ist mittels Wälzlagern, z.B. Kugellagern 5, in dem Getriebegehäuse 4 gelagert. Um die Bewegung des Getriebegehäuses 4 bezüglich der Getriebewelle 3 an der dem Getriebegehäuse 4 abgewandten Seite 3b der Getriebewelle 3 abzunehmen, weist das Getriebegehäuse 4 eine drehfest mit diesem verbundene, die Getriebewelle 3 durchsetzende Welle 15 auf. Zur Übertragung des Drehmoments der insbesondere hochdrehzahlseitigen Antriebswelle 7 ist ein auf dieser sitzendes Zahnrad 16 vorgesehen, das mit einem am Getriebegehäuse 4 drehbar gelagerten Zahnrad 17 kämmt, welches wiederum mit einem drehfest mit der Getriebewelle 3 verbundenen Zahnrad 18 in Eingriff steht. Die Zahnräder 16, 17, 18 ermöglichen eine Übersetzung des Drehmoments des Antriebsmotors 6 und überbrücken die exzentrische Anordnung seiner Antriebswelle 7 bezüglich der Getriebeachse 2.

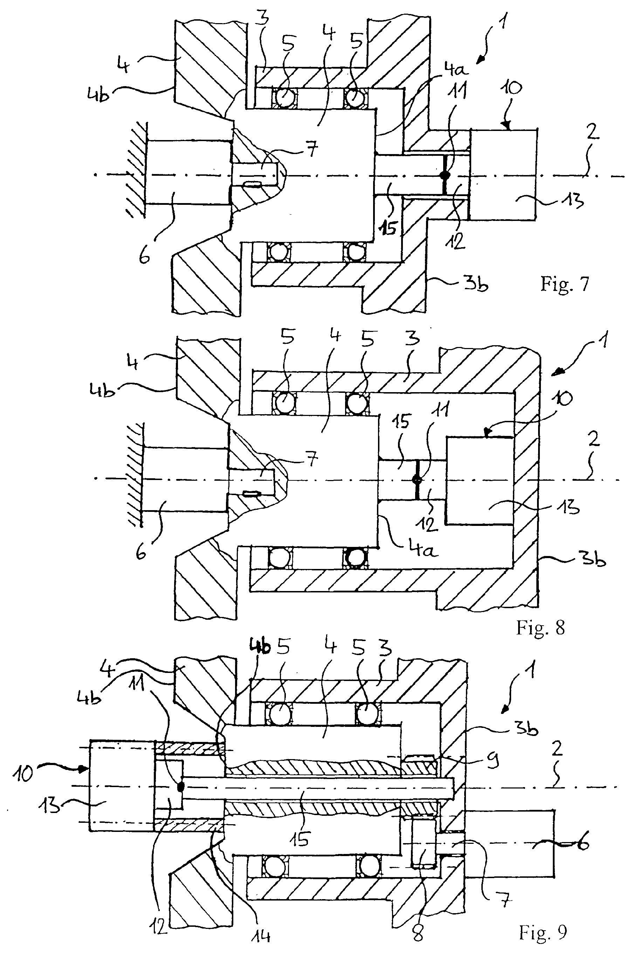

Das in Fig. 7 dargestellte Getriebe 1 weist ein erstes Teil 3 in Form einer Getriebewelle auf. Diese ist in einem anderen Teil 4 in Form eines Getriebegehäuses mittels Lagern 5 koaxial gelagert und relativ zu diesem drehbar. Der Antriebsmotors 6 greift mit seiner Antriebswelle 7 zum Verschwenken der Getriebewelle 3 um eine Drehachse 2 eines mehrachsigen Roboters (nicht gezeigt) an diesem an. Das Getriebegehäuse 4 kann z.B. stationär an einem Gestell einer Roboterbasis angeordnet sein, während die Getriebewelle 3 ein Karussell mit dem Roboter trägt. In diesem Fall handelt es sich bei der Drehachse 2 um die A1-Achse des Roboters. Alternativ kann zur Lagerung der Getriebewelle 3 in dem Getriebegehäuse 4 auch nur ein Lager 5 sein. Auch kann eine Lagerung außerhalb des Getriebes über die an dem Getriebegehäuse 4 und der Getriebewelle 3 angeordneten Roboterkomponenten (nicht gezeigt) vorgesehen sein.

Zur Erfassung und Überwachung des Drehwinkels der Getriebewelle 3 bezüglich des Getriebegehäuses 4 ist eine Sensoreinrichtung 10 vorgesehen, die koaxial zur Drehachse 2 des Roboters angeordnet ist. Die Sensoreinrichtung 10 umfasst einen in einem Sensorgehäuse oder einer Aufnahme 13 geführten Wellenstummel 12, der über eine Kupplung 11 mit einer zu dem Getriebegehäuse 4 hinragenden Welle 15 der Getriebewelle 3 drehfest verbunden ist. Sie erfasst den Drehwinkel zwischen Wellenstummel 12 und Aufnahme 13. Die Aufnahme 13 der Sensoreinrichtung 10 ist an der der Getriebewelle 3 abgewandten Außenseite 4b des z.B. stationären Getriebegehäuses 4 angeordnet, wobei der über die Kupplung 11 mit der Getriebewelle 3 verbundene Wellenstummel 12 in das Getriebegehäuse 4 eingreift. Die Kupplung 11 kann beispielsweise als Klemm-, Balgkupplung oder dergleichen ausgebildet sein. Der auf der Getriebewelle 3 sitzende Antriebsmotor 6 ist in der gezeigten Ausführung zentral zur Drehachse 2 angeordnet.

Die Sensoreinrichtung 10 ist beispielsweise als Überwachungseinrichtung zur Erfassung und/oder Überwachung des Drehwinkels zwischen dem Getriebegehäuse 4 und der Getriebewelle 3 ausgebildet und steht z.B. mit einem Momentenausgleich für die Drehachse 2 des Roboters in Verbindung (nicht dargestellt).

Die Ausführung gemäß Fig. 8 unterscheidet sich von der in Fig. 7 gezeigten Ausführung dadurch, dass die Sensoreinrichtung 10 an der der Getriebewelle 3 zugewandten Innenseite des Getriebegehäuses 4 angeordnet ist, wobei die Aufnahme 13 der Sensoreinrichtung 10 wiederum fest mit dem z.B. stationären Getriebegehäuse 4 verbunden ist, während der Wellenstummel 12 über die Kupplung 11 mit der zu dem Getriebegehäuse 4 hinragenden Welle 15 der Getriebewelle 3 drehfest verbunden ist. Selbstverständlich kann z.B. auch die Aufnahme 13 der Überwachungseinrichtung 10 mit der Getriebewelle 3 drehfest verbunden und der Wellenstummel 12 an dem Getriebegehäuse 4 angeordnet sein (nicht dargestellt).

In Fig. 9 ist ein Getriebe 1 mit einer mittels Lagern 5 in einem Getriebegehäuse 4 gelagerten Getriebewelle 3 dargestellt. Zum Antrieb der Getriebewelle 3 ist ein bezüglich ihrer Drehachse 2 exzentrisch an dem Getriebegehäuse 4 angeordneter Antriebsmotor 6 mit einem auf einer das Getriebegehäuse 4 durchsetzenden Antriebswelle 7 sitzenden Zahnrad 8 vorgesehen, welches mit einem drehfest mit der Getriebewelle 3 verbundenen Zahnrad 9 kämmt. Zur Erfassung und Überwachung des Drehwinkels der Getriebewelle 3 bezüglich des z.B. stationären Getriebegehäuses 4 ist wiederum eine koaxial zur Drehachse 2 des Roboters angeordnete Sensoreinrichtung 10 vorgesehen, die entsprechend der Sensoreinrichtung 10 gemäß Fig. 7 und 8 ausgebildet ist und den Drehwinkel zwischen dem in der Aufnahme 13 geführten Wellenstummel 12 und der Aufnahme 13 erfasst. Wie aus der Zeichnung ersichtlich, ist die in das Getriebe 1 integrierte Sensoreinrichtung 10 in diesem Fall aus Platzgründen im Bereich der dem Getriebegehäuse 4 abgewandten Stirnseite 4b der Getriebewelle 3 angeordnet. Die Aufnahme 13 der Sensoreinrichtung 10 ist über eine Hülse 14 drehfest an der Getriebewelle 3 festgelegt, während der Wellenstummel 12 über eine Kupplung 11 mit einer die Getriebewelle 3 zu ihrer dem Getriebegehäuse 3 abgewandten Seite 3b hin durchsetzenden Welle 15 des Getriebegehäuses 4 verbunden ist.

Alternativ kann an der Getriebewelle 3 eine das Getriebegehäuse 4 zu seiner der Getriebewelle 3 abgewandten Seite hin durchsetzende Welle (nicht gezeigt) vorgesehen sein, an der die Sensoreinrichtung bezüglich des Getriebegehäuses 4 angeordnet sein kann.

## Patentansprüche

1. Getriebe (1), insbesondere für einen Roboter, mit einer Antriebswelle (7) und wenigstens zwei relativ zu dieser und relativ zueinander drehbaren Teilen (3, 4), wobei eine Bewegung des einen Teils (3, 4) auf seiner dem anderen Teil (4, 3) abgewandten Seite (3b, 4b) abnehmbar ist, **dadurch gekennzeichnet, dass** wenigstens eines der drehbaren Teile (3, 4) eine drehfest mit ihm verbundene Welle (15) aufweist, die zumindest zu dem anderen Teil (4, 3) hinragt.

2. Getriebe nach Anspruch 1, **dadurch gekennzeichnet, dass** die an dem einen Teil (3, 4) angeordnete Welle (15) das andere Teil (4, 3) zu seiner dem einen Teil (3, 4) abgewandten Seite (4b, 3b) hin durchsetzt.

3. Getriebe nach Anspruch 1 oder 2, **dadurch gekennzeichnet, dass** die an dem einen Teil (3,4) angeordnete Welle (15) Antrieb einer in und/oder an dem anderen Teil (4,3) angeordneten Sensoreinrichtung (10) ist.

4. Getriebe nach Anspruch 3, **dadurch gekennzeichnet, dass** die Sensoreinrichtung (10) eine Überwachungseinrichtung zur Erfassung und/oder Begrenzung der Drehparameter ist.

5. Getriebe nach Anspruch 3 oder 4, **dadurch gekennzeichnet, dass** die Sensoreinrichtung (10) einen in einer Aufnahme (13) geführten Wellenstummel (12) aufweist und den Drehwinkel zwischen Wellenstummel (12) und Aufnahme (13) erfasst.

6. Roboter nach Anspruch 5, **dadurch gekennzeichnet, dass** die Aufnahme (13) der Sensoreinrichtung (10) an dem einen Teil (3, 4) angeordnet und der Wellenstummel (12) mit der am anderen Teil (4, 3) angeordneten Welle (15) drehfest verbunden ist.

7. Roboter nach einem der Ansprüche 3 bis 6, **dadurch gekennzeichnet, dass** eine optische Sensoreinrichtung (10) vorgesehen ist.

8. Roboter nach einem der Ansprüche 3 bis 6, **dadurch gekennzeichnet, dass** eine magnetische Sensoreinrichtung (10), insbesondere ein Resolver, vorgesehen ist.

9. Roboter nach einem der Ansprüche 3 bis 6, **dadurch gekennzeichnet, dass** eine elektrische oder elektromagnetische Sensoreinrichtung (10) vorgesehen ist.

10. Roboter nach einem der Ansprüche 3 bis 9, **dadurch gekennzeichnet, dass** ein mit der Sensoreinrichtung (10) in Verbindung stehender Momentenausgleich für die jeweilige Drehachse (2) des Roboters vorgesehen ist.

11. Getriebe nach einem der Ansprüche 1 bis 10, **dadurch gekennzeichnet, dass** die an dem einen Teil (3, 4) angeordnete Welle (15) mit einem Drehmoment beaufschlagbar ist.

12. Getriebe nach Anspruch 11, **dadurch gekennzeichnet, dass** an der Welle (15) ein Hilfsmotor angeordnet ist.

13. Getriebe nach einem der Ansprüche 1 bis 12, **dadurch gekennzeichnet, dass** die Antriebswelle (7) eine hochdrehzahlseitige Abtriebswelle eines Antriebsmotors (6) oder mit einer solchen verbindbar ist.

14. Getriebe nach einem der Ansprüche 1 bis 13, **dadurch gekennzeichnet, dass** die drehbaren Teile (3, 4) mit bezüglich der Drehzahl der Antriebswelle (7) niedrigerer Drehzahl bewegbar sind.

15. Getriebe nach einem der Ansprüche 1 bis 14, **dadurch gekennzeichnet, dass** die Welle (15) koaxial zur Drehachse (2) wenigstens eines der Teile (3, 4) angeordnet ist.

16. Getriebe nach einem der Ansprüche 1 bis 15, **dadurch gekennzeichnet, dass** die Teile (3, 4) koaxial angeordnet sind.

17. Getriebe nach einem der Ansprüche 1 bis 16, **dadurch gekennzeichnet, dass** das Getriebe (1) ein insbesondere hochuntersetzendes Stirnrad-, Kegelrad-, Schneckenrad- oder Umlaufgetriebe ist.

18. Getriebe nach einem der Ansprüche 1 bis 17, **dadurch gekennzeichnet, dass** das Getriebe (1) ein Harmonic-Drive-Getriebe ist.

19. Getriebe nach einem der Ansprüche 1 bis 18, **dadurch gekennzeichnet, dass** der Antriebsmotor (6) zentral zur Drehachse (2) wenigstens eines der Teile (3,4) angeordnet ist.

20. Getriebe nach einem der Ansprüche 1 bis 18, **dadurch gekennzeichnet, dass** der Antriebsmotor (6) exzentrisch zur Drehachse (2) wenigstens eines der Teile (3, 4) angeordnet ist.

21. Getriebe nach einem der Ansprüche 1 bis 18, **dadurch gekennzeichnet, dass** der Antriebsmotor (6) unter einem endlichen Winkel bezüglich der Drehachse (2) wenigstens eines der Teile (3, 4) angeordnet ist.

22. Getriebe nach Anspruch 21, **dadurch gekennzeichnet, dass** der Antriebsmotor (6) etwa unter rechtem Winkel bezüglich der Drehachse (2) wenigstens eines der Teile (3, 4) angeordnet ist.

23. Getriebe nach einem der Ansprüche 1 bis 22, **dadurch gekennzeichnet, dass** das eine Teil (3) als Getriebegehäuse und das andere Teil (4) als Getriebewelle ausgebildet ist.

24. Roboter, **gekennzeichnet durch** wenigstens ein Getriebe (1) nach einem der Ansprüche 1 bis 23.
